# EUROPÄISCHE PATENTSCHRIFT

(11) **EP 3 595 573 B1**
(45) Veröffentlichungstag und Bekanntmachung des Hinweises auf die Patenterteilung: **22.02.2023**
(21) Anmeldenummer: 18709618.5
(22) Anmeldetag: 14.03.2018
(51) Int. Cl.: A61C 8/00

(54) **SEKUNDÄRTEIL FÜR EIN DENTALIMPLANTAT UND DENTALES IMPLANTATSET**
SECONDARY PART FOR A DENTAL IMPLANT AND DENTAL IMPLANT SET
ELEMENT SECONDAIRE POUR UN IMPLANT DENTAIRE ET ENSEMBLE D'IMPLANT DENTAIRE

(30) Priorität: 17.03.2017 EP 17161482
(43) Veröffentlichungstag der Anmeldung: 22.01.2020
(73) Patentinhaber: Camlog Biotechnologies GmbH, 4053 Basel (CH)
(72) Erfinder: VACCARO, Antonio, 79689 Maulburg (DE)
(74) Vertreter: Hepp Wenger Ryffel AG
(86) Internationale Anmeldenummer: PCT/EP2018/056342
(87) Internationale Veröffentlichungsnummer: WO 2018/167124

(56) Entgegenhaltungen:
- WO-A1-2013/187792
- WO-A1-2014/025081
- WO-A1-2014/051172
- KR-A- 20140 062 212
- US-A1- 2011 171 599

## Beschreibung

Die vorliegende Erfindung betrifft ein Sekundärteil für ein Dentalimplantat und ein Set aus einem Sekundärteil und einem Dentalimplantat gemäss den Oberbegriffen der unabhängigen Ansprüche.

Dentalimplantate werden in einen Kieferknochen eines Patienten eingesetzt. Dafür wird zunächst das Zahnfleisch (Gingiva) vom Knochen abgehoben und ein Implantatbett im Kieferknochen vorbereitet. Anschliessend wird das Dentalimplantat mit Hilfe eines Einbringpfostens in das Implantatbett eingesetzt. Nach Abschluss des operativen Eingriffs wird in oder auf das Dentalimplantat eine Einheilkappe oder ein Gingivaformer eingesetzt. Falls ein Dentalimplantat nicht optimal eingesetzt ist, so kann es durch ein Ausdrehinstrument in der Bohrung wieder zurück gedreht werden. Nachdem das Zahnfleisch verheilt ist, kann die Einheilkappe oder der Gingivaformer durch einen Scankörper oder ein Abformpfosten ausgetauscht werden, mit deren Hilfe die Position des Dentalimplantats ermittelt werden kann. Alternativ kann mit einem Abformpfosten ein genauer Abdruck der Position des Dentalimplantats genommen werden. Mit Hilfe des Scans oder des Abdrucks wird ein Zahnaufbau erstellt, der wiederum mittels Abutments auf oder in das Dentalimplantat eingesetzt werden kann.

Das Dentalimplantat wird mit verschiedensten Instrumenten oder Zusatzteilen mit vielseitigen Anforderungen gehandhabt und verwendet. Die Instrumente oder Zusatzteile benötigen also eine vielseitige Schnittstelle, mit der sie in das Dentalimplantat eingreifen.

WO 2014025081 A1 und KR 20140062212 A zeigen Sekundärteile für Dentalimplantate, wobei die Sekundärteile jeweils einen Kopfteil und einen Verbindungsteil aufweisen, wobei der Verbindungteil zumindest zwei Federelemente aufweist, die sich entlang einer Längsachse des Sekundärteils erstrecken und jeweils ein koronales und ein apikales Ende aufweisen und am koronalen Ende mit dem Kopfteil verbunden sind, wobei zumindest zwei Federelemente an den jeweiligen apikalen Enden miteinander durch ein Endstück radial abgestützt sind. Die Federelemente weisen einen Mittelteil auf und der Mittelteil zumindest eines der abgestützten Federelemente ist in einer radialen Richtung elastisch auslenkbar. Zumindest ein Federelement weist einen Vorsprung und/oder eine Ausnehmung in radialer Richtung zur Längsachse auf.

US 2013/0171584 zeigt Abutments, die in ein Dentalimplantat eingesetzt werden. Eines der Abutments aus US 2013/0171584 enthält biegbare Finger. Die biegbaren Finger enthalten eine radial auswärts zeigende Projektion, die in eine Gegenkontur des Dentalimplantats eingreift. Zusätzlich zeigt das Dokument Streben mit Verbindungen zwischen den Streben, die sich distal über die Finger erstrecken und das Abutment relativ zum Dentalimplantat ausrichten. Die Finger haben den Nachteil, dass sie mit der Zeit ihre Elastizität verlieren und sich abnutzen.

US 9,119,688 B2 zeigt einen Einbringpfosten für ein Dentalimplantat. Der Einbringpfosten weist biegbare Arme auf, die sich von einem Anschlussteil erstrecken. Die biegbaren Arme greifen in einen Unterschnitt des Dentalimplantates ein. US 9,119,688 hat die gleichen Nachteile wie US 2013/0171584. Zusätzlich hat der Einbringpfosten noch den Nachteil, dass zwischen den Armen Schlitze sind, die sich miteinander verkeilen können, wenn sie als Schüttgut vorliegen.

EP 1 263 345 B1 zeigt eine Kombination aus einer Abdruckkappe und einem Zahnimplantat. Die Abdruckkappe hat ein erstes Ende, das einrastend mit einem Dentalimplantat verbunden wird. Zu diesem Zweck weist das erste Ende mehrere federnde Zacken auf, die in mehrere entsprechende Vertiefungen innerhalb einer koronalen Öffnung des Zahnimplantates eingreifen. Die Zacken haben den Nachteil, dass sie mit der Zeit ihre Funktion verlieren.

Es ist daher die Aufgabe der Erfindung, die Nachteile des Standes der Technik zu überwinden. Insbesondere soll eine Vorrichtung zur Verfügung gestellt werden, die eine stabile und sichere Verbindung zwischen Sekundärteilen und Dentalimplantaten herstellen kann. Besonders bevorzugt ist die Verbindung häufig lösund wiedereinsetzbar, ohne dabei ihre Funktion verlieren zu können.

Als Sekundärteil werden dabei alle Teile verstanden, die in das Implantat auf- oder eingesetzt werden, wie zum Beispiel Instrumente wie Ausdrehinstrumente, Scankörper, Abformpfosten und Einbringpfosten oder Zusatzteile wie Gingivaformer, Einheilkappen, Auswahlabutments, Ausrichthilfen oder Aufbauteile wie Abutments.

Diese Aufgabe wird durch die in den unabhängigen Patentansprüchen definierten Vorrichtungen gelöst. Weitere Ausführungsformen ergeben sich aus den abhängigen Patentansprüchen.

Ein erster Aspekt der vorliegenden Erfindung betrifft ein Sekundärteil für ein Dentalimplantat. Das Sekundärteil enthält einen Kopfteil und einen Verbindungsteil. Der Verbindungsteil weist zumindest zwei Federelemente auf, die sich entlang einer Längsachse des Sekundärteiles erstrecken. Die Federelemente weisen ein koronales und ein apikales Ende auf und sind am koronalen Ende mit dem Kopfteil verbunden. Zusätzlich sind die zumindest zwei Federelemente an den jeweiligen apikalen Enden miteinander durch ein Endstück radial abgestützt. Ein Mittelteil zumindest eines der abgestützten Federelemente ist in einer radialen Richtung elastisch auslenkbar.

Bevorzugt ist der Mittelteil zumindest eines abgestützten Federelementes radial bezogen auf einen Mittelteil eines zweiten abgestützten Federelementes elastisch weiter auslenkbar als das apikale Ende des abgestützten Federelementes radial bezogen auf ein apikales Ende des zweiten abgestützten Federelementes. Die radiale Auslenkung kann in eine radial innere oder in eine radial äussere Richtung zeigen.

Bevorzugt ist der Mittelteil zumindest eines oder zumindest zweier oder zumindest dreier oder zumindest vierer oder aller Federelemente von beim Einsetzen erzeugten Kräften in radialer Richtung weiter auslenkbar als das apikale Ende.

Beim Einsetzen erzeugte Kräfte sind bevorzugt radiale Kräfte, die üblicherweise von einem Dentalimplantat auf das Sekundärteil beim bestimmungsgemässen Einsetzen des Sekundärteiles in ein Dentalimplantat übertragen werden.

Derartige Federelemente haben den Vorteil, dass sie mehrfach wiederverwendbar sind, da sie ihre Form und/oder ihre Elastizität dauerhaft behalten.

Beispiele für Federelemente sind länglich geformte Streben. Die Federelemente sind bevorzugt durch ihre Form elastisch. Alternativ oder zusätzlich sind die Federelemente aus einem Material, das elastischer ist als das des Endstücks und/oder des restlichen Verbindungsteils und/oder Kopfteils. Bevorzugt können die Federelemente ihre elastischen Eigenschaften durch zu- und/oder abnehmende Wandstärke entlang der Längsrichtung erhalten.

In einer bevorzugten Ausführungsform sind die Federelemente länglich ausgebildet, sodass diese aufgrund ihrer Form in radialer Richtung auslenkbar sind. Dies hat den Vorteil, dass spezielle Formgedächtnislegierungen nicht nötig sind, um die Streben in radialer Richtung zu verformen. Formgedächtnislegierungen sind aufwendig zu produzieren. Zudem müssen Formgedächtnislegierungen aktiviert werden.

In einer bevorzugten Ausführungsform ist ein Aussendurchmesser des Verbindungsteils im Verhältnis zur radialen Breite eines der Federelemente oder aller Federelemente relativ gross. Geeignete Verhältnisse (Aussendurchmesser zu radialer Breite) sind grösser als 3, bevorzugt grösser als 5, 6, 7 oder 8. In einigen erfindungsgemässen Ausführungsformen ist das Verhältnis zwischen 6 und 10, bevorzugt 6.5 und 8. Dadurch ist das Federelement elastisch auslenkbar. Der Aussendurchmesser kann ein Aussendurchmesser der Vorsprünge (falls vorhanden) bezeichnen oder - bevorzugt - einen Aussendurchmesser der Federelemente selbst. Die radiale Breite wird relativ zu einer Längsachse des Sekundärteils gemessen, bevorzugt rechtwinklig.

Erfindungsgemäss ist die Querschnittsfläche des Kopfteiles relativ zum Querschnitt einer oder mehrerer oder aller Federelemente gross. Erfindungsgemäss heisst gross, dass ein Verhältnis von Querschnittsfläche des Kopfteils und Querschnittsfläche eines Federelementes grösser als 9, bevorzugt grösser als 15 und besonders bevorzugt grösser als 20 ist. In bestimmten Ausführungsformen kann das Verhältnis 27 oder mehr betragen.

Querschnittsfläche bezeichnet in der vorliegenden Anmeldung eine Fläche in einem Querschnitt, der senkrecht zur Längsachse des Sekundärteils liegt.

Vorteilhafte Sekundärteile sind einfach in das Implantat einsetzbar und einfach wieder entnehmbar. Zusätzlich sollten die Sekundärteile gleichzeitig eine ausreichende Haltekraft ermöglichen. Die oben genannten Zahlenverhältnisse zu radialer Breite, Querschnittsfläche und Aussendurchmesser definieren Sekundärteile, die diese Vorteile aufweisen.

Die Federelemente können in einer bevorzugten Ausführungsform länglich ausgebildet sein. Insbesondere bevorzugt ist ein Verhältnis zwischen der radialen Breite und einer Länge der Federelemente in einem Bereich von 5 bis 20, besonders bevorzugt von 8 bis 18, weiter bevorzugt von 9 bis 16.

Die Federelemente können direkt oder indirekt mit dem Kopfteil verbunden sein.

Die Federelemente sind bevorzugt räumlich voneinander getrennt. Alternativ können die Federelemente auch als Segmente, insbesondere Kreissegmente, innerhalb einer zusammenhängenden Struktur ausgebildet sein.

Bevorzugt weist der Verbindungsteil eine axiale Länge von 1 mm bis 7 mm auf, besonders bevorzugt 2 mm bis 3.5 mm.

Bevorzugt weist der Verbindungsteil eine Verdrehsicherung auf. Verbindungsteile mit Verdrehsicherung haben bevorzugt eine Länge von 2 mm bis 10 mm, besonders bevorzugt 4 mm bis 7.5 mm, weiter bevorzugt 5 mm bis 6 mm.

Bevorzugt weisen die Federelemente eine axiale Länge von 0.5mm bis 10 mm auf, besonders bevorzugt 1 mm bis 4 mm.

Bevorzugt weist der Verbindungsteil einen Durchmesser von 0.6 mm bis 12 mm auf, besonders bevorzugt einen Durchmesser von 1.2 mm bis 3 mm.

Die Federelemente sind bevorzugt so ausgelegt, dass eine axiale Abzugskraft des Sekundärteils zwischen 0.5 N und 40 N liegt, besonders bevorzugt zwischen 0.5 N und 20 N, weiter bevorzugt zwischen 1 N und 10 N.

Die Abzugskraft kann durch die Länge der Federelemente, deren Flächenträgheitsmoment und den E-Modul des gewählten Materials beeinflusst werden.

In einer bevorzugten Ausführungsform sind im Mittelteil in Umfangsrichtung zwischen den Federelementen Löcher, insbesondere Langlöcher vorgesehen. Die Langlöcher erstrecken sich bevorzugt entlang der Längsachse.

Bevorzugt sind zwei, drei oder vier Langlöcher vorgesehen, die zwischen zwei, drei oder vier Federelementen angeordnet sind, besonders bevorzugt in Umfangsrichtung des Sekundärteils.

Dadurch können die Federelemente räumlich getrennt werden. Zusätzlich können diese Federelemente einfach hergestellt werden.

In einer bevorzugten Ausführungsform weist der Verbindungsteil zumindest drei oder zumindest vier Federelemente auf. Besonders bevorzugt weist der Verbindungsteil drei oder vier oder mehr Federelemente auf.

Diese Ausführungsformen sind besonders einfach herstellbar.

In einer bevorzugten Ausführungsform sind zumindest drei, besonders bevorzugt vier, Federelemente durch das Endstück radial abgestützt. Besonders bevorzugt sind drei oder vier oder mehr Federelemente radial abgestützt.

Dadurch wird die Auslenkbarkeit des Endstücks eingeschränkt. Zugleich ist die elastische Auslenkbarkeit des Mittelteils der Federelemente nahezu unverändert.

Bevorzugt ist mindestens ein Federelement durch seine beiden benachbarten Federelemente in Umfangsrichtung abgestützt.

In einer besonders bevorzugten Ausführungsform sind alle Federelemente, die sich vom Kopfteil in apikaler Richtung erstrecken, durch das Endstück abgestützt.

Erfindungsgemäss weist zumindest ein Federelement zumindest einen Vorsprung und/oder eine zumindest eine Ausnehmung in radialer Richtung zur Längsachse auf. Besonders bevorzugt weisen zumindest drei oder zumindest vier Federelemente einen Vorsprung und/oder eine Ausnehmung auf. Besonders bevorzugt weisen drei oder vier Federelemente einen Vorsprung und/oder eine Ausnehmung auf.

Ein Federelement kann einen, zwei, drei oder mehr Vorsprünge aufweisen. Ein Federelement kann eine, zwei oder mehr Ausnehmungen aufweisen.

In einer vorteilhaften Ausführungsform weisen alle Federelemente einen Vorsprung und/oder eine Ausnehmung auf. Der Vorsprung und/oder die Ausnehmung befindet sich vorteilhafterweise in dem Mittelteil zwischen dem apikalen und dem koronalen Ende der Federelemente. Bevorzugt zeigt der Vorsprung in eine radial äussere Richtung. In einer Variante weist zumindest ein, bevorzugt alle, Federelement(e) genau einen Vorsprung auf.

In einer besonders bevorzugten Variante weisen alle Federelemente genau einen Vorsprung auf, welcher am Federelement mittig entlang der Längsachse des Sekundärteils angeordnet ist.

Dadurch kann eine Einrastposition des Sekundärteils im Dentalimplantat vorbestimmt werden, in welcher der Vorsprung in eine Nut des Dentalimplantates oder in welcher die Ausnehmung in einen Vorsprung des Dentalimplantates einrastet.

In einer bevorzugten Ausführungsform weist der zumindest eine Vorsprung und/oder die zumindest eine Ausnehmung in Längsrichtung ein stetiges Profil auf.

Ein stetiges Profil soll heissen, dass das Federelement im Bereich des Vorsprungs oder der Ausnehmung keine Stufen in Längsrichtung aufweist, also insbesondere keine Flächen mit einer Normalen in Richtung der Längsrichtung.

Dadurch kann das Sekundärteil nach einem Einrasten in einer Ausnehmung oder einem Vorsprung im Dentalimplantat ohne zusätzliche Werkzeuge wieder entnommen werden.

Bevorzugt weist zumindest ein Vorsprung eines Federelementes eine in radialer Richtung abgeschrägte Fläche auf.

Durch die abgeschrägte Fläche ist eine äussere Oberfläche der Vorsprünge kleiner und das Sekundärteil lässt sich mit geringerer Kraft zwischen Positionen, bevorzugt axial, verschieben.

In einer bevorzugten Ausführungsform ist eine Aussenfläche zumindest eines Federelements radial nach aussen gewölbt. Bevorzugt ist eine Innenfläche radial nach aussen gewölbt. Die Bezeichnungen aussen und innen beziehen sich bei den Flächen auf eine radiale Richtung, welche durch die Längsachse des Sekundärteils definiert wird.

Dadurch kann das Sekundärteil auch in Innenkonturen eines Dentalimplantates mit einer glatten Wand und/oder mit einer leicht konisch geformten Wand eingesetzt werden. Ein weiterer Vorteil ist, dass die Federelemente eine Vorspannung haben können und dadurch höhere Reibungskräfte ausüben können und eine bessere Sicherung erreicht werden kann.

In einer bevorzugten Ausführungsform weist zumindest eines der koronalen und/oder apikalen Enden der Federelemente eine Verdickung auf. Dadurch können die Federelemente Kräfte und quer zur Längsachse und/oder Biegemomente quer zur Längsachse gleichmässiger aufnehmen. Besonders bevorzugt erstreckt sich die Verdickung in eine radial innere Richtung.

In einer bevorzugten Ausführungsform verläuft das Endstück parallel zu einer Ebene senkrecht zur Längsachse.

In einer bevorzugten Variante ist das Endstück zusätzlich über ein zusätzliches Versteifungselement mit dem Kopfteil verbunden. Das Versteifungselement ist bevorzugt mittig zwischen zumindest zwei Federelementen angeordnet. Besonders bevorzugt ist das Versteifungselement im Zentrum zwischen allen Federelementen angeordnet.

Das Endstück ist bevorzugt dreikantig ausgeführt. Besonders bevorzugt ist das Endstück vier-, fünf-, sechs- oder mehrkantig. Bevorzugt entspricht die Anzahl der Kanten der Anzahl der Federelemente.

Dadurch wird die Beweglichkeit und damit die Auslenkbarkeit des Endstückes eingeschränkt.

Bevorzugt wird das Endstück radial von einem Kreis mit einem Durchmesser von 0.6 mm bis 6 mm, besonders bevorzugt 1.2 mm bis 3 mm, begrenzt.

In einer besonders bevorzugten Ausführungsform ist das Versteifungselement ein Zylinder, bevorzugt ein Vollzylinder, mit einem drei- oder vierkantigen Querschnitt, besonders bevorzugt mit einem quadratischen Querschnitt.

Derartige Versteifungselemente lassen sich einfach herstellen.

Alternativ ist das Versteifungselement ein runder, bevorzugt kreisrunder, Zylinder, bevorzugt ein Vollzylinder.

In einer bevorzugten Ausführungsform besteht der Verbindungsteil aus einem einzigen Material. Besonders bevorzugt besteht das ganze Sekundärteil aus einem einzigen Material. Bevorzugt ist das Material ein Metall oder eine Metalllegierung. Besonders bevorzugte Metalle oder Metalllegierungen sind Stahl, Federstahl, Titan oder eine Titanlegierung, Kobalt-Chrom-Legierungen und Nitinol. Alternativ kann der Verbindungsteil oder das Sekundärteil auch aus einem Kunststoff gefertigt werden. Bevorzugte Materialien sind PEEK, PEKK, PAEK, POM, PC, PET und faserverstärkte Varianten dieser Kunststoffe.

In einer Variante wird das Sekundärteil ohne Formgedächtnislegierungen wie Nitinol gefertigt.

In einer bevorzugten Ausführungsform enthält der Verbindungsteil zusätzlich eine um die Längsachse nicht-rotationssymmetrische Verdrehsicherung. Die nicht-rotationssymmetrische Verdrehsicherung ist bevorzugt mit einer Gegenkontur des Dentalimplantates in Eingriff bringbar. Besonders bevorzugt ist die Verdrehsicherung zwischen den Federelementen und dem Kopfteil angeordnet.

Dadurch wird eine rotatorische Position des Sekundärteils im Verhältnis zum Dentalimplantat festgelegt. Zudem können Drehmomente, insbesondere Torsionsmomente, übertragen werden.

In einer bevorzugten Ausführungsform wird die Verdrehsicherung durch eine Aussenkontur gebildet. Besonders bevorzugt weist die Verdrehsicherung zumindest eine Nocke und/oder Vertiefung auf. Zusätzliche oder alternativ kann die Verdrehsicherung auch eine mehrkantige Aussenkontur aufweisen.

Über Aussenkonturen können Drehmomente, insbesondere Torsionsmomente, effektiver übertragen werden. Alternativ kann die Verdrehsicherung durch eine Innenkontur gebildet werden.

Erfindungsgemäss ist der Kopfteil des Sekundärteils so ausgebildet, dass das Sekundärteil einen Einbringpfosten, eine Einheilkappe, einen Gingivaformer, einen Scankörper, einen Abformpfosten, ein Auswahlabutment, eine Ausrichthilfe, ein Abutment oder ein Ausdrehinstrument bildet.

Ein weiterer Aspekt der Erfindung betrifft ein Set aus einem Dentalimplantat und einem wie vorstehend beschriebenen Sekundärteil.

In einer bevorzugten Ausführungsform weist das Dentalimplantat einen Hohlraum mit zumindest einer Ausnehmung und/oder zumindest einem Vorsprung auf. Bevorzugt ist die Ausnehmung eine Rille, besonders bevorzugt ist die Rille durch ein Gewinde gebildet.

In einer bevorzugten Ausführungsform kann die Ausnehmung durch einen Gewindegang, eine umlaufende Nut oder durch einzelne Vertiefungen gebildet werden. Die Ausnehmung bzw. der Vorsprung ist bevorzugt in Eingriff bringbar mit einem korrespondierenden Vorsprung bzw. Ausnehmung der Federelemente.

Die Ausnehmung und/oder der Vorsprung können mit den Federelementen in Verbindung gebracht werden und dadurch eine Haltekraft der Federelemente erhöhen. Zudem kann eine Endposition des Sekundärteils definiert werden.

In einer bevorzugten Ausführungsform weist der Hohlraum eine Längsrichtung auf und verläuft entlang der Längsrichtung konisch.

Anhang von Figuren, welche lediglich Ausführungsbeispiele darstellen, wird die Erfindung im Folgenden näher erläutert. Es zeigten schematisch:
- Figur 1:: Eine perspektivische Darstellung einer erfindungsgemässen Ausführungsform eines Gingivaformers,
- Figur 2:: eine perspektivische Darstellung einer ersten erfindungsgemässen Ausführungsform eines Ausdrehinstrumentes,
- Figur 3:: eine perspektivische Darstellung einer zweiten erfindungsgemässen Ausführungsform eines Ausdrehinstrumentes,
- Figur 4:: eine schematische Darstellung einer ersten erfindungsgemässen Ausführungsform eines Einbringpfostens,
- Figur 5:: eine perspektivische Ansicht einer zweiten erfindungsgemässen Ausführungsform eines Einbringpfostens,
- Figur 6:: eine perspektivische Darstellung einer dritten erfindungsgemässen Ausführungsform eines Einbringpfostens,
- Figur 7A bis 7G:: verschiedene Ausführungsformen eines Kopfteiles von Sekundärteilen,
- Figur 8:: eine Halbschnittansicht eines in ein Dentalimplantat eingesetzten Sekundärteils,
- Figur 9:: eine seitliche Ansicht eines Verbindungsteils und
- Figur 10:: einen Querschnitt des Verbindungsteils aus Figur 9.

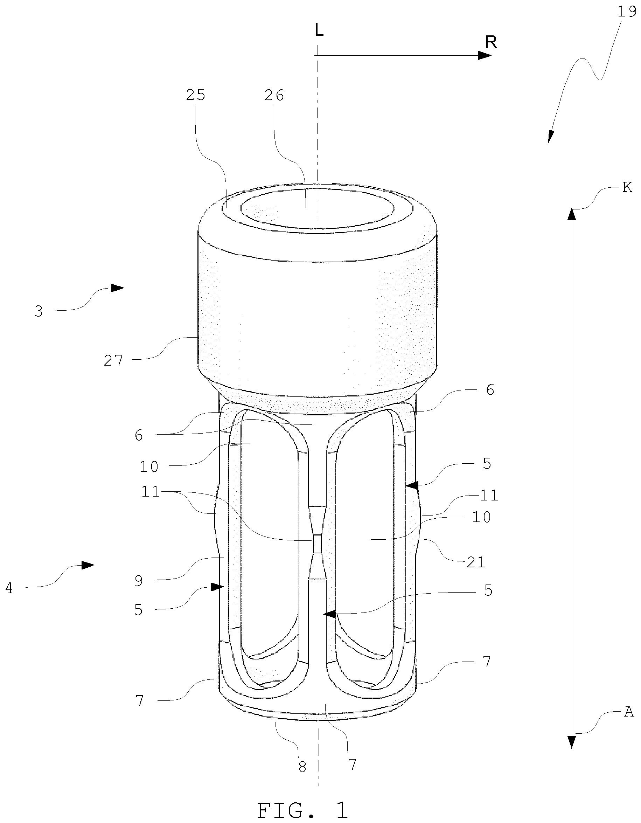

Die perspektivische Darstellung in Figur 1 zeigt ein Sekundärteil 19 mit einem Kopfteil 3 und einem Verbindungsteil 4. Das Sekundärteil ist als Gingivaformer ausgebildet. Der Kopfteil 3 ist in einer koronalen Richtung K angeordnet und der Verbindungsteil 4 ist in einer apikalen Richtung A angeordnet. Die koronale Richtung K zeigt in Richtung einer Zahnkrone. Die apikale Richtung A zeigt in Richtung einer Implantatspitze.

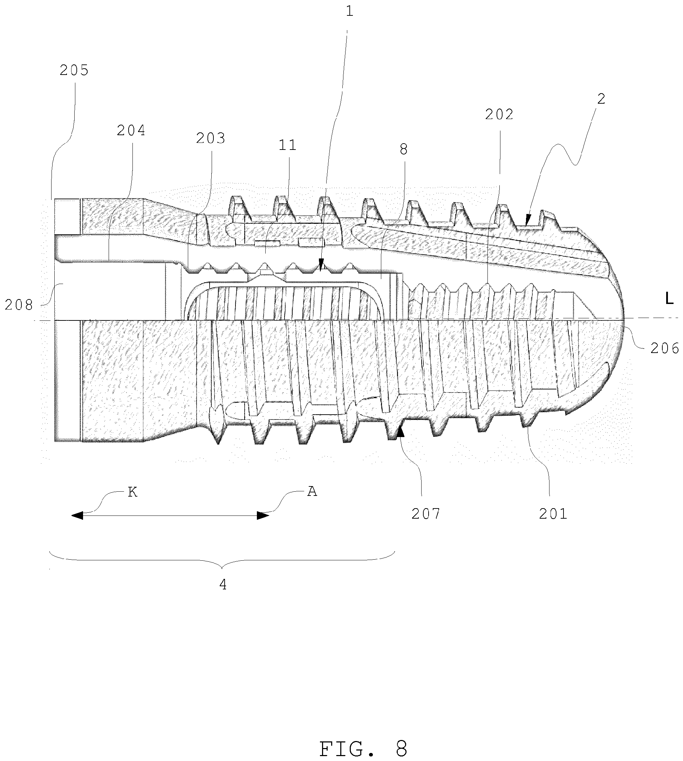

An einem koronalen Ende 25 des Kopfteils ist eine Ausnehmung 26 vorgesehen, in der eine Eingriffskontur angeordnet ist. In die Ausnehmung 26 kann ein Werkzeug zum Einsetzen des Gingivaformers 19 in ein Dentalimplantat 2 (siehe Figur 8) eingebracht werden. Weiterhin weist der Kopfteil 3 einen zylindrischen Abschnitt 27 auf, mit dem eine Gingiva geformt werden kann.

Apikal vom Kopfteil 3 ist der Verbindungsteil 4 vorgesehen. Direkt an dem Kopfteil schliessen sich koronale Enden 6 von vier Federelementen 5 an. Die Federelemente 5 sind als längliche Streben ausgebildet und erstrecken sich in Richtung einer Längsachse L des Gingivaformers. An den gegenüberliegenden apikalen Enden 7 der Federelemente 5 ist ein Endstück 8 an die Federelemente angeschlossen. Zwischen den vier Federelementen 5 sind vier Langlöcher 10 vorgesehen. Dabei sind die vier Federelemente gleichartig geformt und in gleichmässigen Abständen entlang eines Umfangs des Gingivaformers angebracht.

Das Endstück 8 ist eine kreisrunde Platte und im Zentrum zwischen den Federelementen 5 angeordnet. Weiterhin ist das Endstück konzentrisch zum zylindrischen Abschnitt 27 angeordnet.

In einem Mittelteil 9 weisen die Federelemente 5 Vorsprünge 11 auf. Die Vorsprünge 11 erstrecken sich von der Längsachse L aus gesehen in einer radialen Richtung R nach aussen. Die Vorsprünge 11 weisen ein stetiges Profil 21 mit einem stetigen Übergang auf, d.h. einen Übergang ohne einen Sprung zur übrigen radialen Aussenkontur der Federelemente 5.

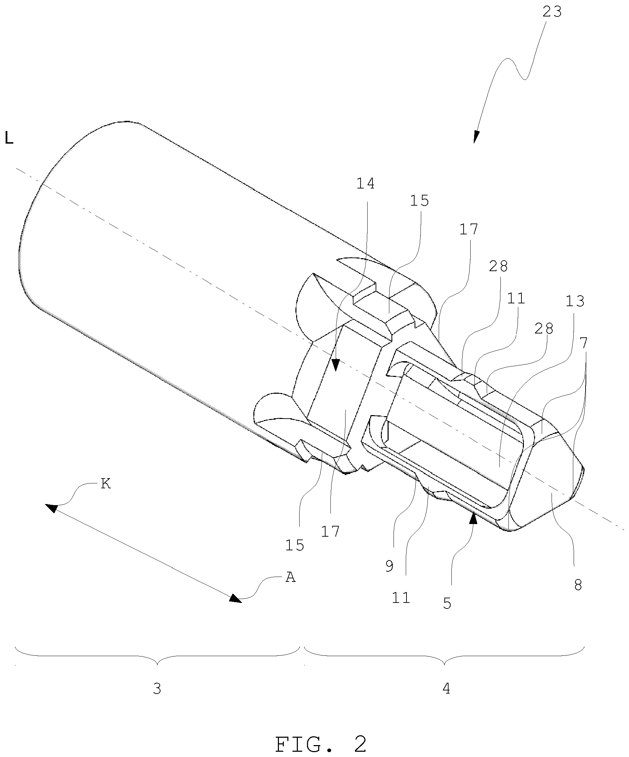

Figur 2 zeigt eine perspektivische Darstellung einer ersten erfindungsgemässen Ausführungsform eines Sekundärteils 23, das als Ausdrehinstrument ausgebildet ist. Mit Hilfe des Ausdrehinstrumentes 23 können Dentalimplantate, die bereits in den Knochen eingesetzt wurden, wieder zurückgedreht werden. Ein Verbindungsteil 4 enthält eine Verdrehsicherung 14, sowie sich davon erstreckende Federelemente 5 und ein Endstück 8. Die Verdrehsicherung 14 ist zwischen Federelementen 5 und Kopfteil 3 angebracht. Durch die Verdrehsicherung 14 können Drehmomente von dem Ausdrehinstrument 23 auf das Dentalimplantat 2 übertragen werden. Dafür weist die Verdrehsicherung 14 drei Nocken 15 auf. Die drei Nocken 15 sind gleichmässig entlang des Umfanges des Ausdrehinstrumentes verteilt. Zusätzlich zu den Nocken 15 weist das Ausdrehinstrument eine dreikantige Aussenseite mit drei Flächen 17 auf. Die Nocken 15 werden in Eingriff gebracht mit einer entsprechenden Gegenkontur des Dentalimplantates 2.

Die drei Flächen 17 sind flach und bilden so einen Unterschnitt gegenüber einer runden Ausnehmung eines Implantats (siehe Figur 8). Dadurch kann das Ausdrehinstrument 23 der Ausnehmung einfacher geführt werden und Innenflächen des Implantates werden geschont.

Dabei wird das Ausdrehinstrument 23 in Längsrichtung L durch drei Federelemente 5 im Implantat gesichert. Durch das Endstück 8 stützen sich die drei Federelemente 5 an ihrem apikalen Ende 7 gegenseitig ab. Dadurch werden die Federelemente nur an einem Mittelteil 9 verformt. Ein Vorsprung 11 greift dann in eine entsprechende Vertiefung des Dentalimplantates 2 ein. In einer koronalen Richtung K und in einer apikalen Richtung A vom Vorsprung 11 sind angewinkelte Flächen 28 vorgesehen. Durch die angewinkelten Flächen wird der Vorsprung 11 beim Einsetzen zunächst radial nach innen verformt und springt durch die elastischen Federkräfte in eine Ausnehmung, sobald die entsprechende Ausnehmung erreicht ist. Sobald ein Eingriff durch das Ausdrehinstrument beendet ist, kann das Ausdrehinstrument wieder entfernt werden. Bei der Entnahme wird der Mittelteil 9 von den angewinkelten Flächen 28 des Vorsprung 11 radial nach innen gedrückt.

In einem radialen Zentrum zwischen den Federelementen 5 ist ein Versteifungselement 13 vorgesehen. Das Versteifungselement 13 erstreckt sich von der Verdrehsicherung 14 bis zum Endstück 8 und weist einen dreikantigen Querschnitt auf. Das Endstück ist plattenförmig ausgebildet.

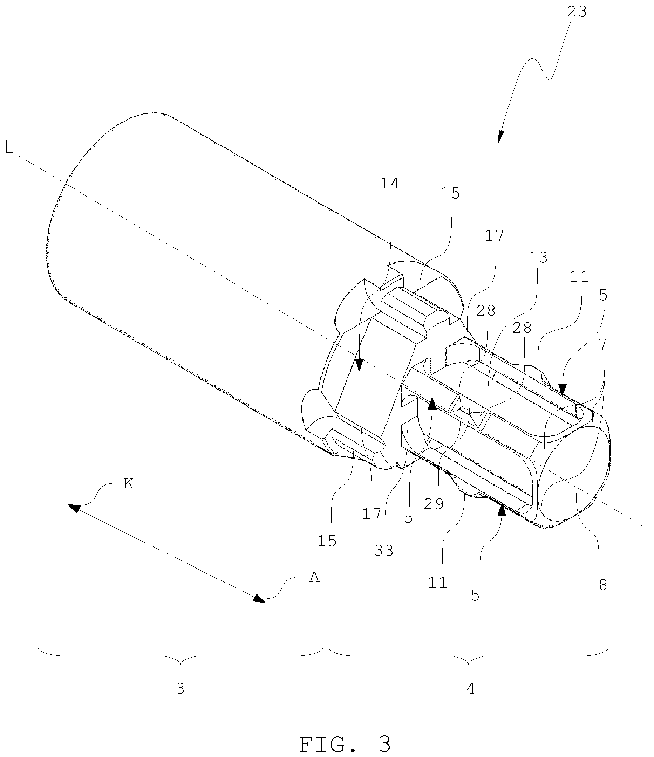

Figur 3 zeigt eine perspektivische Darstellung einer zweiten erfindungsgemässen Ausführungsform eines Sekundärteils 23, das als Ausdrehinstrument ausgebildet ist. Wie das Sekundärteil 23 in Fig. 2 weist das Ausdrehinstrument 23 eine Verdrehsicherung 14, Federelemente 5 mit Vorsprüngen 11 und einem Endstück 8 an den apikalen Ende 7 der Federelemente 5 auf. Im Unterschied zu dem Ausdrehinstrument 23 aus Figur 2 weist das Ausdrehinstrument 23 aus Figur 3 vier Federelemente 5 auf. Die Vorsprünge der Federelemente 5 enthalten wiederum die abgeschrägten Flächen 28 in Längsrichtung L. Zusätzlich dazu weisen die Vorsprünge 11 des Ausdrehinstrumentes 23 seitlich abgeschrägte Flächen 29 auf.

Durch die abgeschrägten Flächen 29 ist eine äussere Oberfläche der Vorsprünge 11 kleiner und das Sekundärteil 23 lässt sich mit geringerer Kraft zwischen Einrastpositionen verschieben.

Weiterhin weist auch das Ausdrehinstrument 23 ein Versteifungselement 13 auf. Das Versteifungselement 13 erstreckt sich von der Verdrehsicherung 14 bis zum Endstück 8 und verläuft parallel zu den Federelementen 5. Das Versteifungselement 13 ist als Zylinder ausgebildet mit einem quadratischen Querschnitt. Eine Längsachse des Versteifungselements ist identisch mit der Längsachse L.

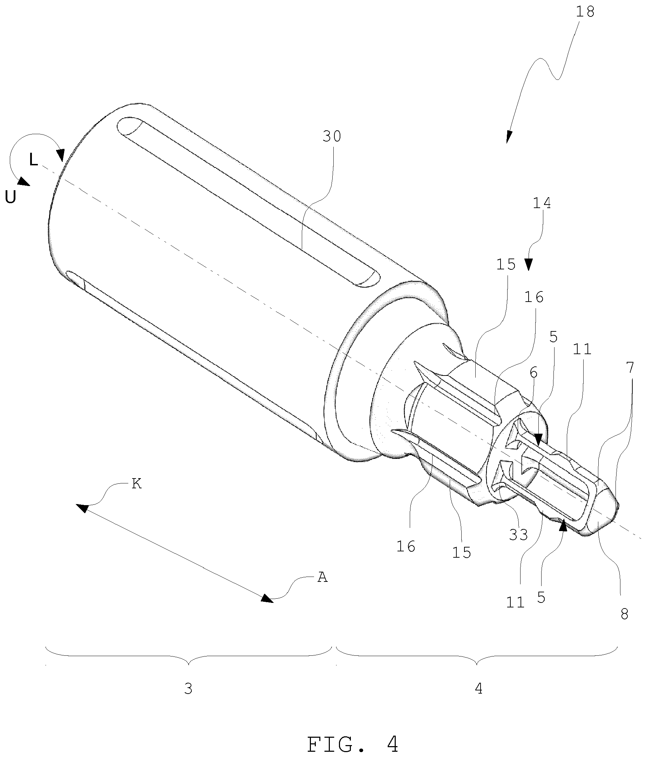

Figur 4 zeigt eine perspektivische Darstellung einer ersten erfindungsgemässen Ausführungsform eines Sekundärteils 18, das als Einbringpfosten ausgebildet ist. Das Sekundärteil 18 weist einen Kopfteil 3 sowie einen Verbindungsteil 4 auf. Der Verbindungsteil 4 sichert das Dentalimplantat 2 entlang einer Längsachse L sowie in Umfangsrichtung U zur Längsachse L. Am Kopfteil 3 kann das Dentalimplantat 2 durch einen Benutzer gehalten werden, ohne das Dentalimplantat 2 zu berühren. Ausserdem kann am Kopfteil 3 das Dentalimplantat 2 transportiert und gelagert werden, ohne empfindliche Oberflächen des Dentalimplantates 2 zu berühren und damit zu beschädigen. Der Kopfteil 3 ist auf einer apikalen Seite angeordnet und weist längliche Nuten 30 auf.

Der Verbindungsteil 4 weist eine Verdrehsicherung 14, Federelemente 5 und ein Endstück 8 auf. Die Verdrehsicherung 14 umfasst längliche Nocken 15. Zwischen den Nocken 15 befinden sich längliche Vertiefungen 16. Von einem apikalen Ende der Verdrehsicherung 14 erstrecken sich elastischen Federelemente 5. Die elastischen Federelemente 5 enthalten Vorsprünge 11. Das Endstück 8 ist in der Ausführungsform von Figur 4 dreikantig ausgeführt. Dabei kann das Endstück auch vier, fünf, sechs oder mehrkantig sein. Weiterhin zeigt Figur 4, dass die Federelemente 5 an ihren koronalen Enden 6 eine Verdickung 33 aufweisen.

Die Nocken 15 sowie die Vorsprünge 11 werden mit den entsprechenden Gegenkonturen des Dentalimplantates 2 in Eingriff gebracht. Damit ein Benutzer einfach erkennen kann, welche Orientierung der Einbringpfosten 18 aufweist, sind die länglichen Nuten 30 die Nocken 15 sowie die Vorsprünge 11 in Umfangsrichtung U an derselben Position angebracht.

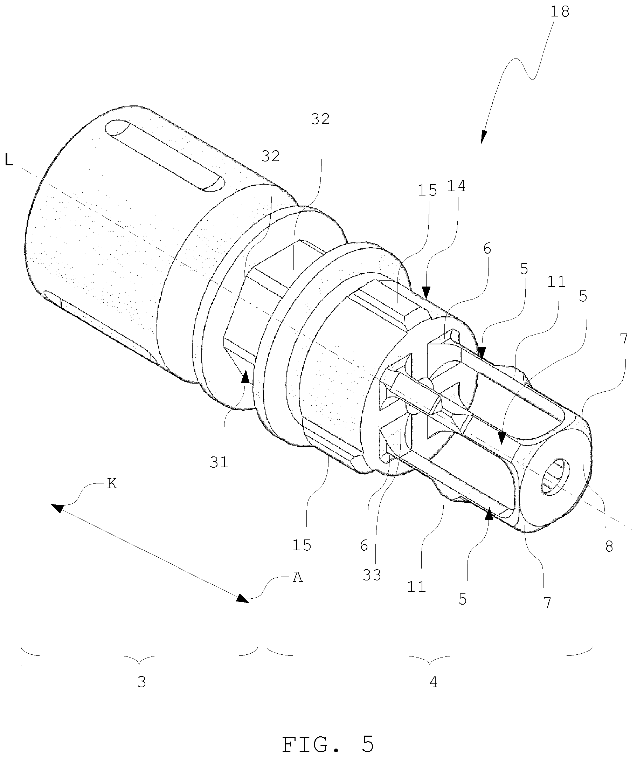

Eine weitere erfindungsgemässe Ausführungsform eines Sekundärteils 18, das als Einbringpfosten ausgebildet ist, ist in Figur 5 gezeigt. Im Unterschied zu dem Einbringpfosten aus Figur 4 ist die Verdrehsicherung 14 nur durch Nocken 15 ausgestaltet. Zwischen den Nocken 15 erstreckt sich ein kreiszylindrischer Körper.

Weiterhin weist der Kopfteil 3 zusätzlich einen Halterungsabschnitt 31 auf. Der Halterungsabschnitt 31 hat eine sechskantige Kontur 32. Mit der sechskantigen Kontur 31 kann der Einbringpfosten 18 von einer Verpackung (nicht gezeigt) gehalten werden. Das koronale Ende 6 jedes der Federelemente 5 weist eine Verdickung 33 auf. Die Verdickung 33 erstreckt um einen Umfang der Federelemente. Dabei erstreckt sich die Verdickung 33 in eine radial innere Richtung des Sekundärteils 18.

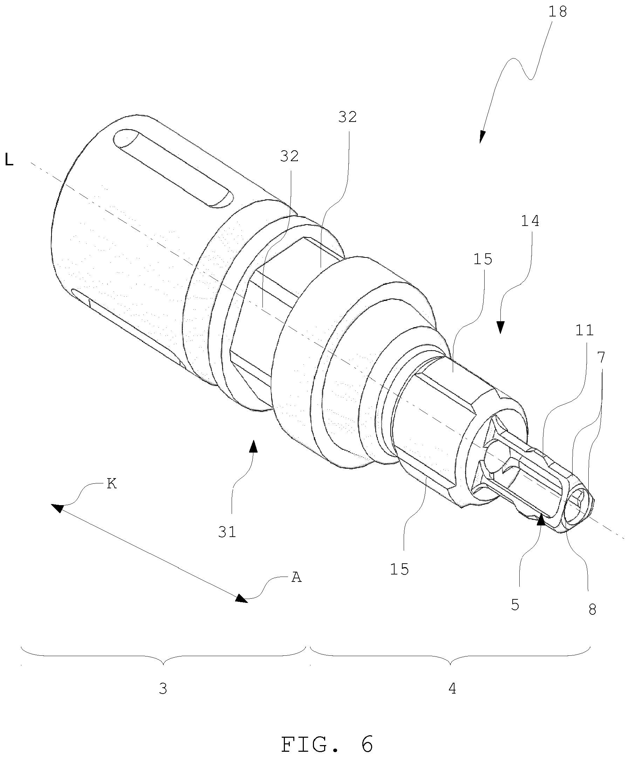

Figur 6 zeigt eine perspektivische Darstellung einer dritten erfindungsgemässen Ausführungsform eines Sekundärteils 18, das als Einbringpfosten ausgebildet ist. Der Einbringpfosten aus Figur 6 kombiniert die Verdrehsicherung 14 und den Halterungsabschnitt 31 des Einbringpfostens aus Figur 5 mit den drei Federelementen 5 aus Figur 4.

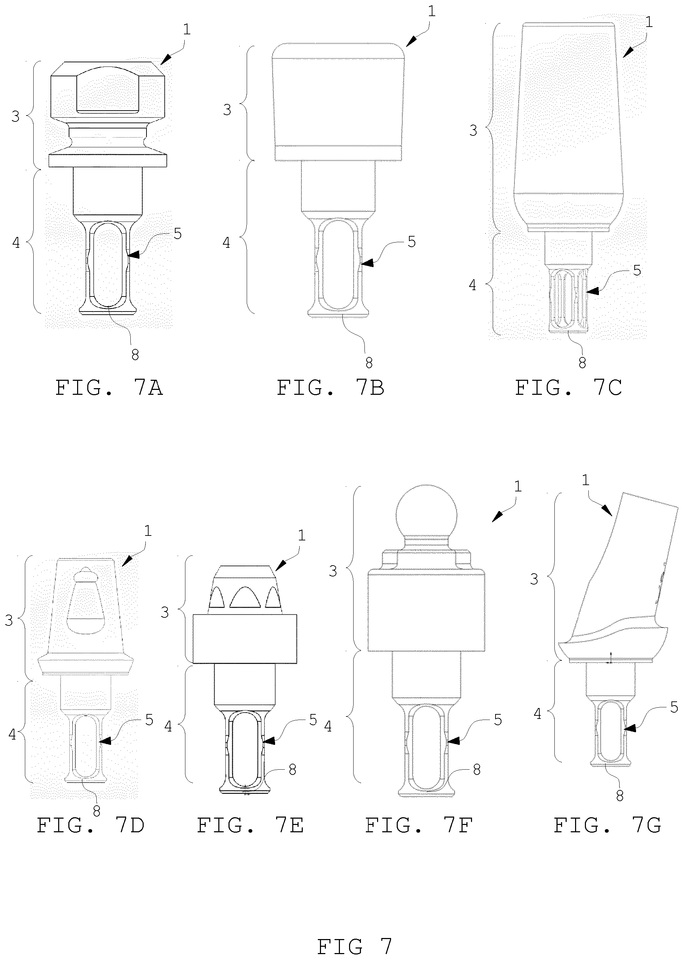

Figuren 7A bis 7G zeigen verschiedene Kopfteile 3 von Sekundärteilen 1. In Figur 7A ist der Kopfteil als Einbringpfosten ausgeformt. In Figur 7B ist der Kopfteil als Gingivaformer ausgeführt. Figuren 7C bis 7G zeigen Kopfteile, die als verschiedene Abutments ausgeformt sind, nämlich als modifizierbares Standardabutment (Fig. 7C), vorgefertigtes Standardabutment (Fig. 7D), Stegaufbau (Fig. 7E), Kugelaufbau (Fig. 7F) und als abgewinkeltes Abutment (Fig. 7G). Selbstverständlich kann der kreisrunde Teil zwischen Federelementen 5 und Kopfteil 3 auch als Verdrehsicherung 14, wie in Figuren 2 bis 6 gezeigt, ausgeführt werden. Auch die Federelemente 5 und das Endstück 8 können wie die Federelemente 5 der Figuren 2 bis 6 ausgestaltet sein.

Figur 8 zeigt einen Verbindungsteil 4 eines Sekundärteils 1, das in ein Dentalimplantat 2 eingesetzt ist. Figur 8 zeigt einen Halbschnitt, bei dem eine obere Hälfte der Figur eine Schnittansicht des Dentalimplantates zeigt. Das Dentalimplantat 2 weist ein koronales Ende 205 und ein apikales Ende 206 auf. Eine Aussenkontur 207 ist als Gewinde 201 ausgebildet. Das Gewinde 201 greift in einen Kieferknochen eines Patienten ein. Im Inneren des Dentalimplantates 2 erstreckt sich vom koronalen Ende 205 eine längliche Ausnehmung 208. An das koronale Ende 205 schliesst sich in der Ausnehmung 208 eine Verdrehsicherung an. Die Verdrehsicherung bildet eine Gegenkontur 204 zu der Verdrehsicherung 14 aus Figur 5. Daher weist die Verdrehsicherung ein nicht-rotationssymetrisches Profil auf. Das nichtrotationssymetrische Profil in Figur 8 ist kreisrund mit entsprechenden Nuten ausgebildet, sodass die Gegenkontur 204 mit dem Kreiszylinder und den Nocken aus Figur 5 formschlüssig eingefügt werden kann. Apikal von der Verdrehsicherung ist ein erstes Innengewinde 203 vorgesehen. Wenn das Sekundärteil 1 in das Dentalimplantat 2 eingesetzt wird, dann wird das Sekundärteil 1 in Längsrichtung L in die Ausnehmung 208 eingeführt. Dabei ist ein Querschnitt des Endstückes 8 kleiner als ein Innenquerschnitt des Gewindes 203 sowie der Gegenkontur 204.

Im Unterschied dazu stehen die Vorsprünge 11 von den Federelementen 5 radial nach aussen hervor. Wird das Sekundärteil 1 eingesetzt, so wird der Vorsprung 11 vom Gewinde 203 nach innen gedrückt. Die Federelemente 5 wirken dieser Kraft entgegen, sodass ein Reibschluss entsteht. Wenn das Sekundärteil weiter in Längsrichtung geschoben wird, so springen die Vorsprünge in einen Gewindegang des Gewindes 203 und sichern das Sekundärteil in Längsrichtung L. Dabei kann der Vorsprung 11 das Sekundärteil 1 in einem beliebigen Gewindegang sichern. Sobald ein Benutzer die Position erreicht hat, die er wünscht, kann er das Sekundärteil ohne weitere Sicherungsmassnahmen in dieser Position belassen.

Eine Endposition ist durch das Endstück 8 definiert, das an einem sich verengenden Querschnitt am Ende des Gewindes 203 anstösst. Zusätzlich zum ersten Gewinde 203 ist ein zweites Gewinde 202 vorgesehen. Durch das zweite Gewinde 202 kann gegebenenfalls zusätzlich oder alternativ ein Sekundärteil mit einer Schraube, insbesondere mit einer Kaminschraube gesichert werden. In einer alternativen Ausführungsform zu Fig. 8 kann der Verbindungsteil 4 des Sekundärteils 1 auch in das zweite Gewinde 202 eingesetzt werden und an Gewindegängen des zweiten Gewindes das Sekundärteil in Längsrichtung L sichern. Eine Endposition des Sekundärteils wird dann durch ein apikales Ende der Ausnehmung 208 bestimmt.

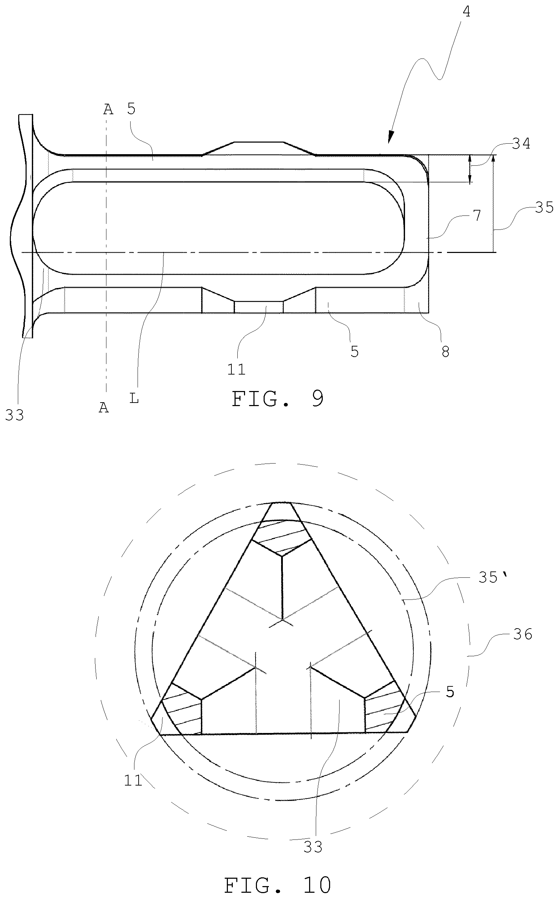

Figur 9 zeigt eine seitliche Ansicht eines Verbindungsteils 4. In Figur 9 ist der Verbindungsteil 4 des in Figur 6 gezeigten Einbringpfostens 18 gezeigt. Der in Figur 9 gezeigte Verbindungsteil 4 könnte jedoch auch in Verbindung mit sämtlichen Kopfteilen 3 der Figuren 7A bis 7G kombiniert werden.

Die in Figur 9 gezeigten Federelemente 5 haben eine radiale Breite 34. Der Verbindungsteil 4 weist einen Aussendurchmesser 35 auf. In Figur 9 ist zu erkennen, dass die Radialbreite im Verhältnis zum Aussenradius 35 relativ klein ist. In dem Ausführungsbeispiel ist das Verhältnis ca. 4. Das heisst ein Verhältnis zwischen Aussendurchmesser und radialer Breite beträgt etwa 8.

Figur 10 zeigt einen Querschnitt durch die Achse A-A (siehe Figur 9). Figuren 9 und 10 bilden die Längenverhältnisse einer Ausführungsform eines Verbindungsteils 4 massstabsgetreu ab. Figur 10 zeigt, dass eine Querschnittsfläche der Federelemente 5 klein ist im Verhältnis zu einer Querschnittsfläche des Kopfteils (angedeutet durch die äussere Linie 36). Das abgebildete Verhältnis beträgt ca. 27 zu 1. Dadurch, dass die Federelemente 5 relativ dünn ausgebildet sind, erhalten sie ihre elastische Eigenschaft und können sich elastisch radial nach innen verformen, wenn sie wie in Figur 8 gezeigt in ein Implantat 201 eingeführt werden.

## Patentansprüche

1. Sekundärteil (1; 18; 19; 23) für ein Dentalimplantat (2), wobei das Sekundärteil einen Kopfteil (3) und einen Verbindungsteil (4) enthält, wobei der Verbindungsteil (4) zumindest zwei Federelemente (5) zur Fixierung des Sekundärteils in einem Dentalimplantat aufweist, die sich entlang einer Längsachse (L) des Sekundärteils (1) erstrecken und jeweils ein koronales und ein apikales Ende (6,7) aufweisen und am koronalen Ende (6) mit dem Kopfteil (3) verbunden sind,
wobei die zumindest zwei Federelemente (5) an den jeweiligen apikalen Enden (7) miteinander durch ein Endstück (8) radial abgestützt sind, wobei die Federelemente (5) einen Mittelteil aufweisen und der Mittelteil (9) zumindest eines der abgestützten Federelemente (5) in einer radialen Richtung elastisch auslenkbar ist und
wobei zumindest ein Federelement einen Vorsprung und/oder eine Ausnehmung in radialer Richtung zur Längsachse aufweist (11),
wobei ein Verhältnis von Querschnittsfläche des Kopfteils und Querschnittsfläche eines Federelementes grösser als 9, bevorzugt grösser als 15 und besonders bevorzugt grösser als 20 ist,
und der Kopfteil (3) so ausgebildet ist, dass das Sekundärteil (1) einen Einbringpfosten (18), Einheilkappe (19), Gingivaformer (20), Scankörper (21), Abformpfosten, Abutment (22), Auswahlabutment, Ausrichthilfe oder ein Ausdrehinstrument (23) bildet.

2. Sekundärteil (1) gemäss Anspruch 1, **dadurch gekennzeichnet, dass** im Mittelteil (9) in Umfangsrichtung zwischen den Federelementen (5) Löcher, insbesondere Langlöcher (10), vorgesehen sind, die sich bevorzugt entlang der Längsachse (L) erstrecken.

3. Sekundärteil (1) gemäss einem der vorherigen Ansprüche, **dadurch gekennzeichnet, dass** der Verbindungsteil drei oder vier oder mehr Federelemente (5) aufweist.

4. Sekundärteil (1) gemäss einem der vorherigen Ansprüche, **dadurch gekennzeichnet, dass** drei oder vier oder mehr Federelemente (5) durch das Endstück (8) radial abgestützt sind.

5. Sekundärteil (1) gemäss einem der vorherigen Ansprüche, **dadurch gekennzeichnet, dass** ein, bevorzugt drei oder vier, besonders bevorzugt alle, Federelemente (5) zumindest einen Vorsprung (11) und/oder zumindest eine Ausnehmung in radialer Richtung zur Längsachse aufweist, bevorzugt in dem Mittelteil (9) zwischen apikalen und koronalen Ende (6,7) der Federelemente (5).

6. Sekundärteil (1) gemäss Anspruch 5, **dadurch gekennzeichnet, dass** der zumindest eine Vorsprung und/oder die zumindest eine Ausnehmung in Längsrichtung ein stetiges Profil (21) aufweisen.

7. Sekundärteil (1) gemäss einem der vorherigen Ansprüche, **dadurch gekennzeichnet, dass** zumindest eines, bevorzugt alle, Federelemente (5) in radialer Richtung nach aussen gewölbt sind.

8. Sekundärteil (1) gemäss einem der vorherigen Ansprüche, **dadurch gekennzeichnet, dass** das Endstück (8) in einer Ebene orthogonal zu Längsachse (L) verläuft.

9. Sekundärteil (1) gemäss einem der vorherigen Ansprüche, **dadurch gekennzeichnet dass** das Endstück (8) zusätzlich über ein Versteifungselement (13) mit dem Kopfteil (3) verbunden ist, wobei die Versteifungselement bevorzugt im Zentrum zwischen allen Federelementen (5) angeordnet ist.

10. Sekundärteil (1) gemäss einem der vorherigen Ansprüche, **dadurch gekennzeichnet, dass** der Verbindungsteil (4) aus einem einzigen Material besteht, bevorzugt aus einem Metall, einer Metalllegierung oder einem Kunststoff, und/oder dass besonders bevorzugt das Sekundärteil (1) aus einem einzigen Material besteht.

11. Sekundärteil (1) gemäss einem der vorherigen Ansprüche, **dadurch gekennzeichnet, dass** der Verbindungsteil (4) zusätzlich eine um die Längsachse nicht-rotationssymmetrische Verdrehsicherung (14) enthält, wobei die nicht-rotationssymmetrische Verdrehsicherung bevorzugt mit einer Gegenkontur des Dentalimplantates in Eingriff bringbar ist.

12. Sekundärteil (1) gemäss Anspruch 11, **dadurch gekennzeichnet, dass** die Verdrehsicherung (14) durch eine Aussenkontur gebildet wird und besonders bevorzugt zumindest eine Nocke (15) und/oder Vertiefung (16) aufweist und/oder eine mehrkantige Aussenkontur (17).

13. Set aus einem Dentalimplantat (2) und einem Sekundärteil (1) gemäss einem der Ansprüche 1 bis 12.

14. Set gemäss Anspruch 13, **dadurch gekennzeichnet, dass** das Dentalimplantat (2) einen Hohlraum mit zumindest einer Ausnehmung, bevorzugt einer Rille, und/oder zumindest einem Vorsprung aufweist.

15. Set gemäss Anspruch 14, **dadurch gekennzeichnet, dass** der Hohlraum des Dentalimplantats eine Längsrichtung aufweist und in der Längsrichtung zumindest teilweise konisch verläuft.

## Claims

1. Secondary part (1; 18; 19; 23) for a dental implant (2), the secondary part comprising a head part (3) and a connecting part (4), the connecting part (4) having at least two spring elements (5) for fixing the secondary part in a dental implant, which spring elements (5) extend along a longitudinal axis (L) of the secondary part (1) and each have a coronal and an apical end (6, 7) and are connected to the head part (3) at the coronal end (6),
wherein the at least two spring elements (5) are radially supported with each other at the respective apical ends (7) by an end piece (8), wherein the spring elements (5) comprise a central part and the central part (9) of at least one of the supported spring elements (5) is elastically deflectable in a radial direction, and wherein the spring elements (5) are connected to the head part (3) at the coronal end (6).
wherein at least one spring element has a projection and/or a recess in radial direction to the longitudinal axis (11),
wherein a ratio of cross-sectional area of the head portion and cross-sectional area of a spring element is greater than 9, preferably greater than 15, and particularly preferably greater than 20,
and the head portion (3) is configured such that the secondary part (1) forms an insertion post (18), healing cap (19), healing abutment (20), scan body (21), impression post, abutment (22), selection abutment, alignment aid, or unscrewing instrument (23).

2. Secondary part (1) according to claim 1, **characterized in that** holes, in particular elongated holes (10), are provided in the central part (9) in the circumferential direction between the spring elements (5) and preferably extend along the longitudinal axis (L).

3. Secondary part (1) according to one of the previous claims, **characterized in that** the connecting part has three or four or more spring elements (5).

4. Secondary part (1) according to one of the previous claims, **characterized in that** three or four or more spring elements (5) are radially supported by the end piece (8).

5. Secondary part (1) according to one of the previous claims, **characterized in that** one, preferably three or four, particularly preferably all, spring elements (5) have at least one projection (11) and/or at least one recess in radial direction to the longitudinal axis, preferably in the central part (9) between apical and coronal end (6,7) of the spring elements (5).

6. Secondary part (1) according to claim 5 **characterized in that** the at least one projection and/or the at least one recess have a continuous profile (21) in the longitudinal direction.

7. Secondary part (1) according to one of the previous claims, **characterized in that** at least one, preferably all, spring elements (5) are curved outwardly in the radial direction.

8. Secondary part (1) according to one of the previous claims, **characterized in that** the end piece (8) extends in a plane orthogonal to longitudinal axis (L).

9. Secondary part (1) according to one of the previous claims, **characterized in that** the end piece (8) is additionally connected to the head part (3) via a stiffening element (13), the stiffening element preferably being arranged in the center between all spring elements (5).

10. Secondary part (1) according to one of the previous claims, **characterized in that** the connecting part (4) consists of a single material, preferably a metal, a metal alloy or a plastic, and/or **in that** particularly preferably the secondary part (1) consists of a single material.

11. Secondary part (1) according to one of the previous claims, **characterized in that** the connecting part (4) additionally contains an anti-rotation device (14) which is non-rotationally symmetrical about the longitudinal axis, the nonrotationally symmetrical anti-rotation device preferably being engageable with a mating contour of the dental implant.

12. Secondary part (1) according to claim 11 **characterized in that** the anti-rotation device (14) is formed by an outer contour and particularly preferably has at least one cam (15) and/or depression (16) and/or a polygonal outer contour (17).

13. Set comprising a dental implant (2) and a secondary part (1) according to any one of claims 1 to 12.

14. Set according to claim 13 **characterized in that** the dental implant (2) has a cavity with at least one recess, preferably a groove, and/or at least one projection.

15. A set according to claim 14, **characterized in that** the cavity of the dental implant has a longitudinal direction and is at least partially conical in the longitudinal direction.

## Revendications

1. Partie secondaire (1 ; 18 ; 19 ; 23) pour un implant dentaire (2), la partie secondaire comprenant une partie de tête (3) et une partie de liaison (4), la partie de liaison (4) présentant au moins deux éléments élastiques (5) pour la fixation de la partie secondaire dans un implant dentaire, qui s'étendent le long d'un axe longitudinal (L) de la partie secondaire (1) et présentent chacun une extrémité coronale et une extrémité apicale (6, 7) et sont reliés à la partie de tête (3) à l'extrémité coronale (6),
les au moins deux éléments élastiques (5) étant soutenus radialement l'un par rapport à l'autre aux extrémités apicales respectives (7) par une pièce d'extrémité (8), les éléments élastiques (5) présentant une partie centrale et la partie centrale (9) d'au moins l'un des éléments élastiques soutenus (5) pouvant être déviée de manière élastique dans une direction radiale et
dans lequel au moins un élément élastique présente une saillie et/ou un évidement dans la direction radiale par rapport à l'axe longitudinal (11),
dans lequel un rapport entre la surface de section transversale de la partie de tête et la surface de section transversale d'un élément élastique est supérieur à 9, de préférence supérieur à 15 et de manière particulièrement préférée supérieur à 20,
et la partie de tête (3) est réalisée de telle sorte que la partie secondaire (1) forme un pilier de mise en place (18), une coiffe de cicatrisation (19), un façonneur de gencive (20), un scan body (21), un pilier de prise d'empreinte, un pilier (22), un pilier de sélection, une aide à l'alignement ou un instrument d'extraction (23).

2. Partie secondaire (1) selon la revendication 1, **caractérisée en ce que** des trous, en particulier des trous oblongs (10), qui s'étendent de préférence le long de l'axe longitudinal (L), sont prévus dans la partie centrale (9) dans la direction circonférentielle entre les éléments élastiques (5).

3. Partie secondaire (1) selon l'une des revendications précédentes, **caractérisée en ce que** la partie de liaison comprend trois ou quatre éléments élastique (5) ou plus.

4. Partie secondaire (1) selon l'une des revendications précédentes, **caractérisée en ce que** trois ou quatre éléments élastiques (5) ou plus sont supportés radialement par la pièce d'extrémité (8).

5. Partie secondaire (1) selon l'une des revendications précédentes, **caractérisée en ce qu'**un, de préférence trois ou quatre, de manière particulièrement préférée tous les éléments élastiques (5) présentent au moins une saillie (11) et/ou au moins un évidement dans la direction radiale par rapport à l'axe longitudinal, de préférence dans la partie centrale (9) entre les extrémités apicale et coronale (6, 7) des éléments élastiques (5).

6. Partie secondaire (1) selon la revendication 5, **caractérisée en ce que** ladite au moins une saillie et/ou ledit au moins un évidement présente un profil continu (21) dans la direction longitudinale.

7. Partie secondaire (1) selon l'une des revendications précédentes, **caractérisée en ce qu'**au moins un, de préférence tous les éléments élastiques (5) sont bombés vers l'extérieur dans la direction radiale.

8. Partie secondaire (1) selon l'une des revendications précédentes, **caractérisée en ce que** la pièce d'extrémité (8) s'étend dans un plan orthogonal à l'axe longitudinal (L).

9. Partie secondaire (1) selon l'une des revendications précédentes, **caractérisée en ce que** la pièce d'extrémité (8) est en outre reliée à la partie de tête (3) par un élément de renforcement (13), l'élément de renforcement étant de préférence disposé au centre entre tous les éléments élastiques (5).

10. Partie secondaire (1) selon l'une des revendications précédentes, **caractérisée en ce que** la partie de liaison (4) est constituée d'un seul matériau, de préférence d'un métal, d'un alliage métallique ou d'une matière plastique, et/ou **en ce que**, de manière particulièrement préférée, la partie secondaire (1) est constituée d'un seul matériau.

11. Partie secondaire (1) selon l'une des revendications précédentes, **caractérisée en ce que** la partie de liaison (4) contient en outre un dispositif anti-torsion (14) ne présentant pas de symétrie de rotation autour de l'axe longitudinal, le dispositif anti-torsion ne présentant pas de symétrie de rotation pouvant de préférence être mis en prise avec un contre-contour de l'implant dentaire.

12. Partie secondaire (1) selon la revendication 11, **caractérisée en ce que** le dispositif anti-rotation (14) est formé par un contour extérieur et présente de préférence au moins une came (15) et/ou un creux (16) et/ou un contour extérieur polygonal (17).

13. Ensemble constitué d'un implant dentaire (2) et d'une partie secondaire (1) selon l'une des revendications 1 à 12.

14. Ensemble selon la revendication 13, **caractérisé en ce que** l'implant dentaire (2) présente un espace creux avec au moins un évidement, de préférence une rainure, et/ou au moins une saillie.

15. Ensemble selon la revendication 14, **caractérisé en ce que** la cavité de l'implant dentaire présente une direction longitudinale et s'étend au moins partiellement de manière conique dans la direction longitudinale.
